(19) Europäisches Patentamt
European Patent Office
Office européen des brevets

(11) EP 4 700 096 A1

(12) EUROPEAN PATENT APPLICATION
published in accordance with Art. 153(4) EPC

(43) Date of publication:
**25.02.2026 Bulletin 2026/09**

(21) Application number: **23934162.1**

(22) Date of filing: **27.12.2023**

(51) International Patent Classification (IPC):
***C09D 11/322*** *(2014.01)* ***B41J 2/01*** *(2006.01)*
***B41M 5/00*** *(2006.01)*

(52) Cooperative Patent Classification (CPC):
**B41J 2/01; B41M 5/00; C09D 11/30; C09D 11/322**

(86) International application number:
**PCT/JP2023/046904**

(87) International publication number:
**WO 2024/219022 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.04.2023 JP 2023067340**

(71) Applicant: **Sakata INX Corporation**
**Osaka-shi, Osaka 541-0047 (JP)**

(72) Inventors:
- **NAKASHIMA, Okinori**
**Osaka-shi, Osaka 541-0047 (JP)**
- **MORIYASU, Kazuki**
**Osaka-shi, Osaka 541-0047 (JP)**
- **UEDA, Eri**
**Osaka-shi, Osaka 541-0047 (JP)**
- **SANO, Takaaki**
**Osaka-shi, Osaka 541-0047 (JP)**

(74) Representative: **Müller-Boré & Partner Patentanwälte PartG mbB**
**Friedenheimer Brücke 21**
**80639 München (DE)**

# (54) INK COMPOSITION FOR INK-JET PRINTING

(57) An object is to provide an aqueous ink composition for inkjet printing which contains a resin emulsion and to stabilize the discharge stability of the ink composition and thereby enhance the image quality of printed matter. As a solution, provided is an ink composition for inkjet printing including a pigment (A), a water-soluble organic solvent (B), a resin emulsion (C), a surfactant (D), and water (E). The water-soluble organic solvent (B) has two or more hydroxyl groups in the molecule and has an SP value of 12.0 $(cal/cm^3)^{1/2}$ or more; the content of the water-soluble organic solvent (B) is 15.0% to 50.0% by mass; the solid content of the resin emulsion (C) is 0.1% to 10.0% by mass; and the surfactant (D) includes an acetylenic glycol-based surfactant (D-1), a silicone-based surfactant (D-2), and an alcohol ethoxylate-based surfactant (D-3) in specific amounts.



Processed by Luminess, 75001 PARIS (FR)

## Description

### Technical Field

The present invention relates to an ink composition for inkjet printing.

### Background Art

Since a print layer formed by inkjet printing is typically a thin film, adding fine resin particles to an ink composition for inkjet printing enhances the film forming property of an ink coating film, increases the drying rate, and suppresses peeling of the print layer. The addition of fine resin particles to the ink composition for inkjet printing also improves the image quality of the print layer.

However, an ink composition for inkjet printing containing fine resin particles may have reduced discharge stability due to inclusion of solid components. Several techniques for improving the discharge stability have been proposed (Patent Literatures 1 and 2). Patent Literatures 1 and 2 propose ink compositions for inkjet printing in which a monomer formulation of a binder resin constituting the fine resin particles is specified, and a water-soluble organic solvent having a specific SP value is used as a solvent.

It has also been reported that the image quality can be improved by incorporating two or more surfactants into an ink composition for inkjet printing (Patent Literatures 3 to 6). Patent Literature 3 discloses a water-based ink composition containing a silicone surfactant and an acetylenic glycol-based surfactant; Patent Literature 4 discloses an ink containing a silicone-based surfactant and a nonionic surfactant; Patent Literature 5 discloses an ink composition containing a specific defoaming agent together with a surfactant, and each of these is described as an ink for inkjet printing which provides high-quality images; and Patent Literature 6 discloses an ink composition containing an acetylenic surfactant and a nonionic surfactant.

### Background Art Literature

### Patent Literature

Patent Literature 1: Japanese Unexamined Patent Application Publication No. 2020-180178
Patent Literature 2: International Publication No. 2020/218287
Patent Literature 3: Japanese Unexamined Patent Application Publication No. 2019-119786
Patent Literature 4: Japanese Unexamined Patent Application Publication No. 2020-50705
Patent Literature 5: Japanese Unexamined Patent Application Publication No. 2012-193268
Patent Literature 6: Japanese Patent No. 7210802


### Summary of Invention

### Problems to Be Solved by the Invention

As described above, although techniques for improving the discharge stability of an ink composition for inkjet printing containing solid components such as fine resin particles have been proposed, sufficient discharge stability is still not always achieved. In particular, when high-speed inkjet printing (in which the ink discharge frequency is increased) is performed or when continuous printing is performed by inkjet printing, the discharge stability may deteriorate, resulting in formation of streaks in solid-printed areas or meandering of linear-printed areas. While acetylenic surfactants have the effect of enhancing the discharge stability of the ink composition, blocking of printed matter was likely to occur. Furthermore, while silicone-based surfactants have the effect of enhancing the discharge stability of the ink composition, there was a concern that the lamination property might deteriorate.

Accordingly, the present invention provides an aqueous ink composition for inkjet printing which contains a resin emulsion, and an object of the present invention is to stabilize the discharge stability (particularly, the discharge stability during continuous printing) and thereby enhance the image quality, preferably while suppressing the occurrence of blocking of printed matter, further preferably while suppressing deterioration of the lamination property of printed coating film.

## Means for Solving the Problems

Specifically, the present invention relates to the following ink composition for inkjet printing.

[1] An ink composition for inkjet printing, including a pigment (A), a water-soluble organic solvent (B), a resin emulsion (C), a surfactant (D), and water (E), wherein:

the water-soluble organic solvent (B) has, in its molecule, two or more hydroxyl groups and has an SP value of 12.0 $(cal/cm^3)^{1/2}$ or more at 25°C (298 K), as calculated by a formula of "$\{(\Delta H - RT)/(M/D)\}^{1/2}$" (in the formula, ΔH represents a latent heat of vaporization (cal/mol), R represents a gas constant (1.99 (cal/K·mol)), T represents a temperature (K), M represents a molecular weight (g/mol), and D represents a density ($g/cm^3$));
a content of the water-soluble organic solvent (B) relative to the ink composition is 15.0% to 50.0% by mass;
a solid content of the resin emulsion (C) relative to the ink composition is 0.1% to 10% by mass;
the surfactant (D) includes an acetylenic glycol-based surfactant (D-1), a silicone-based surfactant (D-2), and an alcohol ethoxylate-based surfactant (D-3);
a total content of the surfactant (D) relative to the ink composition is 0.1% by mass or more and 3.0% by mass or less;
a mass content ratio [(D-1)/(D-2)] of the acetylenic glycol-based surfactant (D-1) to the silicone-based surfactant (D-2) is 1.0 to 10.0; and
a mass content ratio [(D-1)/(D-3)] of the acetylenic glycol-based surfactant (D-1) to the alcohol ethoxylate-based surfactant (D-3) is 0.1 to 10.0.

The present invention also relates, as a preferred embodiment, to the following ink composition for inkjet printing.
[2] The ink composition for inkjet printing according to [1], wherein a content mass ratio [(D-2)/(D-3)] of the silicone-based surfactant (D-2) to the alcohol ethoxylate-based surfactant (D-3) is 0.1 to 2.0.
[3] The ink composition for inkjet printing according to [1] or [2], further including an alkali-soluble resin dissolved in the ink composition for inkjet printing.
[4] The ink composition for inkjet printing according to any one of [1] to [3], wherein the SP value of the water-soluble organic solvent (B) is 16.0 $(cal/cm^3)^{1/2}$ or less.

## Effects of the Invention

The ink composition for inkjet printing according to the present invention, even though it contains a resin emulsion, which is a solid component, exhibits high discharge stability particularly in high-speed inkjet printing (with increased ink discharge frequency) or continuous printing by inkjet printing, and can provide printed matter with high image quality.

## Mode for Carrying Out the Invention

[1. Formulation of Ink Composition for Inkjet Printing]

An ink composition for inkjet printing according to the present invention (hereinafter, also referred to simply as "ink composition") contains a pigment (A), a water-soluble organic solvent (B), a resin emulsion (C), a surfactant (D), and water (E), and may further contain other optional components.

[1-1. Pigment (A)]

The pigment (A) contained in the ink composition for inkjet printing according to the present invention is a component added to impart coloring power, shielding power, and the like to the ink composition, and examples include coloring pigments, white pigments, and metal powders. Examples of such pigments include, without particular limitation, the following organic and/or inorganic pigments that have been conventionally used in ink compositions.
Examples of the pigments include various organic and inorganic pigments such as dye lake pigments, azo-based pigments, benzimidazolone-based pigments, phthalocyanine-based pigments, quinacridone-based pigments, anthraquinone-based pigments, dioxazine-based pigments, indigo-based pigments, thioindigo-based pigments, perylene-based pigments, perinone-based pigments, diketopyrrolopyrrole-based pigments, isoindolinone-based pigments, nitro-based pigments, nitroso-based pigments, flavanthrone-based pigments, quinophthalone-based pigments, pyranthrone-based pigments, and indanthrone-based pigments.
Examples of yellow pigments include C.I. Pigment Yellow 1, 2, 3, 12, 13, 14, 16, 17, 42, 73, 74, 75, 81, 83, 87, 93,

95, 97, 98, 108, 109, 114, 120, 128, 129, 138, 139, 150, 151, 155, 166, 180, 184, 185, and 213.

Examples of magenta pigments include C.I. Pigment Red 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, and 270, and C.I. Pigment Violet 19.

Examples of cyan pigments include C.I. Pigment Blue 1, 2, 3, 15, 15:1, 15:2, 15:3, 15:4, 15:6, 16, 18, 22, 27, 29, and 60.

Examples of black pigments include carbon black (C.I. Pigment Black 7).

Examples of white pigments include titanium oxide and aluminum oxide, which may be surface-treated with any of various materials such as alumina and silica.

The content of the pigment in the ink composition may vary depending on the type of the pigment and the intended degree of coloring or shielding, and is not particularly limited, but is, for example, about 1.0% to 20.0% by mass, preferably about 3.0% to 15.0% by mass, relative to the entire ink composition. It should be noted that in the case where a colored ink composition is prepared, it is also possible to use another pigment or dye having a different color as a complementary color, or to add another ink composition having a different color.

[1-2. Water-Soluble Organic Solvent (B)]

The water-soluble organic solvent (B) contained in the ink composition for inkjet printing according to the present invention has two or more hydroxyl groups in its molecule and has a specific SP value. The SP value refers to the solubility parameter, and the SP value of the water-soluble organic solvent (B) can be determined by formula 1 below.

[Formula 1] $$\text{SP value (unit: }(\text{cal/cm}^3)^{1/2}) = \{(\Delta H - RT)/(M/D)\}^{1/2}$$

In Formula 1, ΔH represents the latent heat of vaporization (cal/mol) of the water-soluble organic solvent (B); R represents the gas constant and is 1.99 (cal/K·mol); T represents the temperature (in this case, 25°C, i.e., 298 K); M represents the molecular weight (g/mol) of the water-soluble organic solvent (B); and D represents the density (g/cm$^3$) of the water-soluble organic solvent (B). The calculation of the SP value represented by formula 1 is described in detail in "Plastics Materials, 6th Edition" (J.A. Brydson, Butterworth-Heinemann, 1995).

The water-soluble organic solvent (B) has an SP value (25°C) of 12.0 (cal/cm$^3$)$^{1/2}$ or more at 25°C. Also, the SP value (25°C) of the water-soluble organic solvent (B) is preferably 16.0 (cal/cm$^3$)$^{1/2}$ or less, more preferably 14.5 (cal/cm$^3$)$^{1/2}$ or less. Formulating a water-soluble organic solvent having an SP value (25°C) of 12.0 (cal/cm$^3$)$^{1/2}$ or more together with water makes it easy for the water-soluble organic solvent to uniformly mix in the ink composition; this prevents the solid components (including resin emulsions) contained in the ink composition from aggregating and thereby enhances the storage stability of the ink composition. On the other hand, a water-soluble organic solvent having an SP value (25°C) of 16.0 (cal/cm$^3$)$^{1/2}$ or less can maintain the dispersion stability of the pigment.

Examples of the water-soluble organic solvent (B) include diethylene glycol having an SP value (25°C) of 12.2 (cal/cm$^3$)$^{1/2}$; 1,2-propanediol (also referred to as propylene glycol) having an SP value (25°C) of 12.6 (cal/cm$^3$)$^{1/2}$; 1,3-propanediol having an SP value (25°C) of 13.3 (cal/cm$^3$)$^{1/2}$; and glycerin having an SP value (25°C) of 14.9 (cal/cm$^3$)$^{1/2}$.

The content of the water-soluble organic solvent (B) in the ink composition for inkjet printing is 15.0% by mass or more relative to the entire ink composition, preferably 20.0% by mass or more, more preferably 25.0% by mass or more; and is 50.0% by mass or less, preferably 45.0% by mass or less, more preferably 40.0% by mass or less. The content of the water-soluble organic solvent (B) in the ink composition for inkjet printing is, relative to the water (E), preferably 30% by mass or more, more preferably 40% by mass or more, and further preferably 50% by mass or more; and is preferably 400% by mass or less, more preferably 200% by mass or less, and further preferably 150% by mass or less.

The ink composition for inkjet printing may include a water-soluble organic solvent other than the water-soluble organic solvent (B). However, the content thereof should be set so as not to impair the advantageous effects of the present invention, and is typically 3% by mass or less relative to the ink composition for inkjet printing.

[1-3. Resin Emulsion (C)]

The resin emulsion contained in the ink composition for inkjet printing according to the present invention is composed of resin particles dispersed as fine particles in the ink composition. As the resin emulsion, known resin emulsions that have been used in aqueous ink compositions for inkjet printing can be used, and examples include acrylic-based resin emulsions, styrene-acrylic-based resin emulsions, polyester-based resin emulsions, polyurethane-based resin emulsions, polyvinyl acetate-based resin emulsions, polyvinyl chloride-based resin emulsions, polybutadiene-based resin emulsions, and polyolefin-based resin emulsions. The ink composition may contain one kind of the resin emulsion alone or a combination of two or more kinds.

The resin emulsion can enhance the abrasion resistance, the coating film drying property, and anti-cocking property of the ink composition. Furthermore, from the viewpoint of enhancing the drying property of the coating film included in printed matter formed using the ink composition and the adhesion to a substrate, the resin contained in the resin emulsion preferably has a glass transition temperature of 20°C or less. Note that the glass transition temperature is based on the catalog value provided by the manufacturer; if such data are unavailable, it can be determined by differential scanning calorimetry (DSC), and is typically calculated on the basis of the midpoint of the temperature range in which glass transition occurs.

The volume-average particle size of the resin particles contained in the resin emulsion is not particularly limited, and may be selected appropriately in accordance with the intended purpose. From the viewpoint of enhancing abrasion resistance of printed matter, improving image quality, and enhancing inkjet discharge stability, the volume-average particle size is preferably 10 nm or more, more preferably 20 nm or more; and is preferably 600 nm or less, more preferably 400 nm or less.

The resin emulsion is also commercially available, and examples include, but are not limited to, AQUACER 531 (BYK-Chemie GmbH, polyethylene-based resin emulsion); YODOSOL AD173 (Henkel AG & Co. KGaA, acrylic resin emulsion); NeoRez R-966 (Covestro AG, polyether-based polyurethane resin emulsion); SEPOLSION ES (Sumitomo Seika Chemicals Co., Ltd., polyester-based resin emulsion); ACRIT WEM-031U, WEM-200U, WEM-321, WEM-3000, WEM-202U, and WEM-3008 (Taisei Fine Chemical Co., Ltd., acrylic-urethane resin emulsions); ACRIT UW-550CS, UW-223SX, AKW107, and RKW-500 (Taisei Fine Chemical Co., Ltd., acrylic resin emulsions); LUBRIJET N240 (Lubrizol Corporation, acrylic resin emulsion); SUPERFLEX 150, 210, 420NS, 470, 500M, 620, 650, 740, E2000, E4800, and R5002 (DKS Co. Ltd., urethane resin emulsions); VINYBLAN 1245L (Nissin Chemical Industry Co., Ltd., vinyl acetate-acrylic resin emulsion); VINYBLAN 278, 701FE35, 701FE50, 701FE65, 700, 701, 711, 737, and 747 (Nissin Chemical Industry Co., Ltd., vinyl chloride-acrylic resin emulsions); VINYBLAN 2706 and 2685 (Nissin Chemical Industry Co., Ltd., acrylic resin emulsions); VINYBLAN GV6181 (Nissin Chemical Industry Co., Ltd., vinyl acetate resin emulsion); Mowinyl 743N, 6520, 6600, 6820, 7470, and 7720 (Japan Coating Resin Corporation, acrylic resin emulsions); PRIMAL AC-261P and AC-818 (The Dow Chemical Company, acrylic resin particle emulsions); NeoCryl A1092, A2091, A2092, A639, A655, and A662 (DSM Coating Resin Ltd., styrene-acrylic resin particle emulsions); QE-1042 and KE-1062 (Seiko PMC Corporation, styrene-acrylic resin particle emulsions); JE-1056 (Seiko PMC Corporation, acrylic resin particle emulsion); JONCRYL 7199 and PDX-7630A (BASF SE, styrene-acrylic resin emulsions); CHALINE R170BX (Nissin Chemical Industry Co., Ltd., silicone-acrylic resin emulsion); TAKELAC W-6010 (Mitsui Chemicals, Inc., urethane resin emulsion); ELITEL KA-5071S (Unitika Ltd., polyester resin emulsion); and POLYSOL AP-1350 (SHOWA DENKO K.K., acrylic resin emulsion).

The content of the resin emulsion (C) in the ink composition is 0.1% by mass or more in terms of solid content, preferably 0.3% by mass or more, more preferably 0.5% by mass or more; and is 10.0% by mass or less, preferably 8.0% by mass or less, more preferably 5.0% by mass or less. Maintaining the content of the resin emulsion (C) at or above a certain level (0.1 % by mass or more) improves the image quality of printed matter produced using the ink composition, and also enhances the abrasion resistance. In addition, maintaining the content of the resin emulsion (C) at or below a certain level (10.0% by mass or less) enhances the discharge stability of the ink composition, and also improves the storage stability.

[1-4. Surfactant (D)]

The surfactant contained in the ink composition for inkjet printing according to the present invention includes three types of surfactants: an acetylenic glycol-based surfactant (D-1), a silicone-based surfactant (D-2), and an alcohol ethoxylate-based surfactant (D-3).

[1-4-1. Acetylenic Glycol-based Surfactant (D-1)]

The acetylenic glycol-based surfactant (D-1) is an acetylenic alcohol or a compound having both an acetylenic bond and a glycol unit, and can be represented by Structural Formula 1 below. The acetylenic bond portion serves as a hydrophobic portion, and the alcohol portion or the glycol portion serves as a hydrophilic portion, thereby exhibiting surfactant activity.

[Chem. 1]

Structural Formula 1

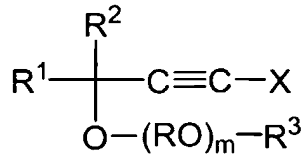

In Structural Formula 1 above, $R^1$ and $R^2$ each independently represent a hydrogen atom or an alkyl group having 1 to 16 carbon atoms; $R^3$ represents a hydrogen atom, an alkyl group having 1 to 6 carbon atoms, or a phenyl group; R represents an alkylene group having 2 to 6 carbon atoms; m represents 0 to 40; and X represents a hydrogen atom or a group represented by Structural Formula 2 below.

[Chem. 2]

Structural Formula 2

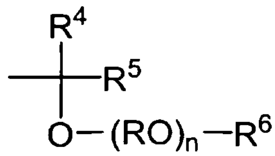

In Structural Formula 2 above, $R^4$ and $R^5$ each independently represent a hydrogen atom or an alkyl group having 1 to 16 carbon atoms; $R^6$ represents a hydrogen atom, an alkyl group having 1 to 6 carbon atoms, or a phenyl group; R represents an alkylene group having 2 to 6 carbon atoms; and n represents 0 to 40.

The acetylenic glycol-based surfactant (D-1) is preferably a surfactant having an acetylenic bond at the center of the molecular structure and a symmetrical molecular structure, and can be represented by either Structural Formula 3 or 4 below.

[Chem. 3]

Structural Formula 3

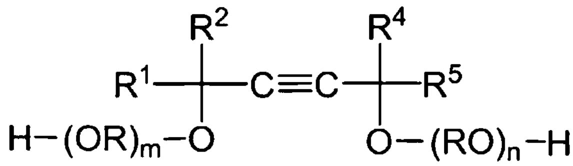

Structural Formula 4

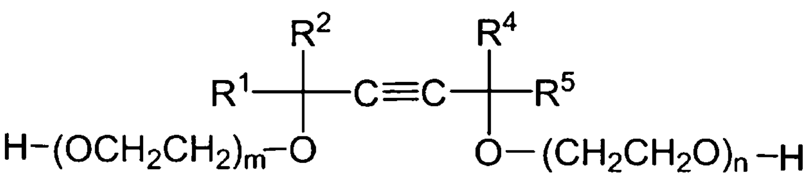

In Structural Formulas 3 and 4 above, $R^1$ to $R^5$, R, m, and n are the same as in Formulas 1 and 2 above; the total of m and n is preferably 1 or more, or more than 1; and is preferably 45 or less, more preferably 40 or less, further preferably 30 or less, still further preferably 20 or less, and even further preferably 15 or less.

Specific examples of the acetylenic glycol-based surfactant (D-1) include acetylene-based diols such as 2,4,7,9-tetramethyl-5-decyne-4,7-diol, 3,6-dimethyl-4-octyne-3,6-diol, 3,5-dimethyl-1-hexyn-3-ol, 2,4-dimethyl-5-hexyn-3-ol, 2,5-dimethyl-3-hexyne-2,5-diol, and 2,5,8,11-tetramethyl-6-dodecyne-5,8-diol, and ethylene oxide adducts thereof.

The acetylenic glycol-based surfactant (D-1) is also commercially available under trade names such as SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465, SURFYNOL 485, OLFINE 1004, OLFINE E1004, OLFINE E1010, and OLFINE E1020 (Nissin Chemical Industry Co., Ltd.). For example, SURFYNOL 465 is an ethylene oxide adduct of 2,4,7,9-tetramethyl-5-decyne-4,7-diol.

[1-4-2. Silicone-based Surfactant (D-2)]

The silicone-based surfactant (D-2) is a polysiloxane such as dimethylpolysiloxane (chemical formula: $(C_2H_6OSi)_n$) or a modified form thereof, and is preferably a surfactant in which the polysiloxane is modified with a polyether (polyether-modified silicone-based surfactant). The polyether-modified silicone-based surfactant is considered to contribute to obtaining good recorded matter without unevenness in high-speed printing because it can suppress an increase in the ink viscosity.

The polyether-modified silicone-based surfactant has a structure in which the hydrocarbon group at a side chain and/or a terminal of a silicone oil is substituted with a polyether group. As the polyether group, a polyethyleneoxy group, a polypropyleneoxy group, and a polyalkyleneoxy group in which ethyleneoxy groups (EO) and propyleneoxy groups (PO) are added in a block or random manner are preferable; for example, a compound in which the polyether group is graft-bonded to the silicone main chain, and a compound in which the silicone and the polyether group are bonded in a block manner can be used.

The silicone-based surfactant (D-2) preferably has an HLB (hydrophilic-lipophilic balance) value of 2.0 or more, more preferably 3.0 or more, further preferably 4.0 or more, and still further preferably 4.5 or more. This is to ensure the solubility of the silicone-based surfactant (D-2) in aqueous ink compositions.

The HLB value is a value that indicates the affinity of a surfactant for water and oil, and can be determined by the following equation according to the Griffin method.

HLB = 20 × [(molecular weight of hydrophilic group contained in surfactant)/(molecular weight of surfactant)]

The silicone-based surfactant (D-2) can also be commercially available, and specific examples include: KF-351A, KF-352A, KF-353, KF-354L, KF-355A, KF-615A, KF-945, KF640, KF-642, KF643, KF-644, KF6020, and KF6011 (KF series, Shin-Etsu Chemical Co., Ltd.); SILFACE SAG (Nissin Chemical Industry Co., Ltd.); BYK-345, 347, 348, and 349 (BYK series, BYK-Chemie GmbH); and TEGO GLIDE 410 and 450, and TEGO Twin 400 (Evonik Industries AG).

[1-4-3. Alcohol Ethoxylate-based Surfactant (D-3)]

The alcohol ethoxylate-based surfactant (D-3) is a compound in which a polyoxyethylene chain and an alkyl group are bonded via an ether linkage, can be represented by the molecular formula "$R_A$-O-$(CH_2CH_2O)_d$-H", and may also be referred to as a poly(oxyethylene) alkyl ether. There is no limitation on the number of carbon atoms in the alkyl group ($R_A$) or the average number of moles (d) of ethyleneoxy chains added in the alcohol ethoxylate-based surfactant (D-3). For example, the number of carbon atoms in the alkyl group ($R_A$) is preferably about 11 to 15, more preferably about 12 to 13; and the average number of moles (d) of ethyleneoxy groups added is preferably about 3 to 15. The average number of moles of ethyleneoxy groups added is more preferably about 5 to 10.

The alcohol ethoxylate-based surfactant (D-3) preferably has an HLB value of 7 or more, and more preferably has an HLB value of 9 or more. The HLB value is an index indicating the degree of hydrophilicity or lipophilicity of a surfactant, calculated by the Griffin method. A smaller HLB value indicates higher lipophilicity, and a larger HLB value indicates higher hydrophilicity. When the HLB value is equal to or larger than a certain level (7 or more), the compatibility of the alcohol ethoxylate-based surfactant (D-3) in the ink composition is enhanced.

Examples of the alcohol ethoxylate-based surfactant (D-3) include the following: trade names EMULGEN 705, EMULGEN 104, EMULGEN 106, EMULGEN 707, EMULGEN 1108, EMULGEN 1118S-70, EMULGEN 1135S-70, and EMULGEN 1150S-60 (Kao Corporation); trade names ADEKA TOL LA-675B and ADEKA TOL LA-775 (ADEKA Corporation); trade name TRITON (registered trademark) HW1000 (The Dow Chemical Company); and trade name SANNONIC SS70 (Sanyo Chemical Industries, Ltd.).

[1-4-4. Other Surfactants]

The ink composition for inkjet printing according to the present invention may contain a surfactant other than the surfactants (D-1), (D-2), and (D-3) (other surfactant). Examples of other surfactants include alcohol alkoxylate-based

surfactants and anionic surfactants.

[1-4-5. Surfactant Content]

The content of the surfactant (D) contained in the ink composition according to the present invention (total content of the surfactants (D-1), (D-2), and (D-3) and other surfactants) is 0.1% by mass or more, preferably 0.5% by mass or more; and is 3.0% by mass or less, preferably 2.5% by mass or less, more preferably 2.0% by mass or less. The total content of the surfactants (D-1), (D-2), and (D-3) relative to the ink composition is 0.1% by mass or more, preferably 0.5% by mass or more; and is 3.0% by mass or less, preferably 2.5% by mass or less, more preferably 2.0% by mass or less. If the total content of the surfactant (D) is low, the surface tension of the ink composition increases. This makes it difficult for the ink composition to spread on a base printing material (particularly, a base printing material with low wettability), and as a result, the image quality of the printed matter tends to decrease. Furthermore, the discharge stability of the ink composition during printing also tends to decrease. On the other hand, if the surfactant content is excessively high, the anti-blocking property of the printed matter tends to decrease.

The contents of the surfactants (D-1), (D-2), and (D-3) are each preferably 0.1% by mass to 1.0% by mass; the content of the acetylenic glycol-based surfactant (D-1) is preferably 0.1% by mass to 1.0% by mass; the content of the silicone-based surfactant (D-2) is preferably 0.1% by mass to 1.0% by mass; and the content of the alcohol ethoxylate-based surfactant (D-3) is preferably 0.3% by mass to 0.7% by mass. It is preferable to adjust the relative content ratio among the surfactants (D-1), (D-2), and (D-3) as described below within the above range.

The content mass ratio [(D-1)/(D-2)] of the acetylenic glycol-based surfactant (D-1) and the silicone-based surfactant (D-2) is 1.0 or more, preferably 3.0 or more; and is 10.0 or less, preferably 8.0 or less. Both the acetylenic glycol-based surfactant (D-1) and the silicone-based surfactant (D-2) enhance the discharge stability of the ink composition; although the mechanism is unclear, adjusting the ratio of the surfactants (D-1) and (D-2) more precisely can further improve the discharge stability during continuous printing. In addition, if the content of the silicone-based surfactant (D-2) is high, it may adversely affect the storage stability and the discharge stability, and there is a concern that the lamination property of the printed matter may deteriorate; therefore, it is preferable to prevent the deterioration of the lamination property by adjusting the content mass ratio [(D-1)/(D-2)].

The content mass ratio [(D-1)/(D-3)] of the acetylenic glycol-based surfactant (D-1) and the alcohol ethoxylate-based surfactant (D-3) is 0.1 or more, preferably 0.2 or more; and is 10.0 or less, preferably 5.0 or less. While the acetylenic glycol-based surfactant (D-1) enhances the discharge stability of the ink composition, adjusting the ratio of the surfactants (D-1) and (D-3) more precisely can further improve the discharge stability during continuous printing. In addition, if the content of the acetylenic glycol-based surfactant (D-1) is high, blocking of the printed matter may easily occur; therefore, it is preferable to prevent blocking by adjusting the content mass ratio [(D-1)/(D-3)].

The content mass ratio [(D-2)/(D-3)] of the silicone-based surfactant (D-2) and the alcohol ethoxylate-based surfactant (D-3) is preferably 0.1 or more, more preferably 0.2 or more; and is preferably 2.0 or less.

[1-5. Water (E)]

The ink composition for inkjet printing according to the present invention contains water. The content of water in the ink composition is preferably 40% by mass or more, more preferably 50% by mass or more; and is preferably 70% by mass or less, more preferably 60% by mass or less.

[1-6. Other Components]

The ink composition for inkjet printing according to the present invention may contain any optional other components; examples of the other components include additives such as a pigment dispersant, an antifungal agent, a rustproofing agent, a thickening agent, an antioxidant, an UV absorbent, a storability improving agent, a defoaming agent, and a pH-adjusting agent.

In particular, the ink composition for inkjet printing preferably contains a pigment dispersant. The pigment dispersant is preferably a polymer-type pigment dispersant and an alkali-soluble resin. It is also preferable that the alkali-soluble resin be dissolved in the ink composition. In order to dissolve the alkali-soluble resin, the ink composition may contain a basic compound.

The alkali-soluble resin is an alkali-soluble resin that can be used as a pigment dispersant or a binder for ordinary inks and paints, and that can be dissolved in an aqueous medium in the presence of a basic compound. The alkali-soluble resin preferably has an anionic group such as a carboxyl group, a sulfonic acid group, or a phosphonic acid group ($-P(=O)(OH)_2$).

The alkali-soluble resin preferably has an acid value of 100 mgKOH/g or more and 250 mgKOH/g or less. If the acid value is less than 100 mgKOH/g, the solubility of the resin decreases, and the storage stability and continuous

discharge stability may be reduced accordingly. Also, an acid value of more than 250 mgKOH/g results in excessively high hydrophilicity, which may reduce storage stability and abrasion resistance. Note that the above acid value is a theoretical acid value, which is arithmetically calculated as the number of milligrams of potassium hydroxide theoretically required to neutralize 1 g of the alkali-soluble resin, on the basis of the formulation of monomers used to synthesize the alkali-soluble resin.

It is preferable that the alkali-soluble resin further have, in molecules thereof, a hydrophobic portion primarily for enhancing the adsorptivity to pigments. Examples of the hydrophobic portion that is to be introduced into the molecules include hydrophobic groups such as long-chain alkyl groups and cyclic hydrocarbon groups of alicyclic or aromatic nature.

The glass transition temperature of the alkali-soluble resin is preferably 0°C or more, more preferably 10°C or more, from the viewpoint of enhancing the anti-blocking property of printed matter. The glass transition temperature of the alkali-soluble resin is preferably 100°C or less, more preferably 80°C or less, from the viewpoint of enhancing the bending tolerance property of printed matter.

In the case where the alkali-soluble resin is an acrylic copolymer resin, the glass transition temperature (Tg) of the alkali-soluble resin is a theoretical glass transition temperature calculated by Wood's equation shown below.

$$\text{Formula:}\quad 1/Tg = W1/Tg1 + W2/Tg2 + W3/Tg3 + \cdots + Wx/Tgx$$

[in the formula, Tg1 to Tgx represent the glass transition temperatures of homopolymers of the respective monomers 1, 2, 3, ..., x that constitute the alkali-soluble resin; W1 to Wx represent the polymerization fractions of the respective monomers 1, 2, 3, ..., x; and Tg represents the theoretical glass transition temperature. Note that the glass transition temperature in Wood's equation is in absolute temperature.]

In the case where the alkali-soluble resin is other than an acrylic copolymer resin, the glass transition temperature of the alkali-soluble resin is a measured glass transition temperature determined by thermal analysis. The thermal analysis can be conducted in accordance with JIS K 7121 (Testing Methods for Transition Temperatures of Plastics). As one example, the glass transition temperature can be measured using a Pyris 1 DSC manufactured by PerkinElmer under the conditions of a heating rate of 20 °C/min and a nitrogen gas flow rate of 20 milliliters per minute.

The weight-average molecular weight (Mw) of the alkali-soluble resin is preferably 5000 or more, more preferably 10000 or more, from the viewpoint of enhancing the water resistance of printed matter. The weight-average molecular weight of the alkali-soluble resin is preferably 100000 or less, more preferably 50000 or less, from the viewpoint of enhancing the solubility in aqueous media.

The weight-average molecular weight can be measured by gel permeation chromatography (GPC) method. As one example, chromatography can be performed using a Water 2690 (manufactured by Waters Corporation) as the GPC apparatus, PLgel, 5μ, MIXED-D (Polymer Laboratories Inc.) as the column, and tetrahydrofuran as the developing solvent, under the conditions of a column temperature of 25°C, a flow rate of 1 milliliter per minute, an RI detector, a sample injection concentration of 10 milligrams per milliliter, and an injection volume of 100 microliters, and the weight-average molecular weight can be determined in terms of polystyrene equivalence.

Examples of the alkali-soluble resin include acrylic copolymer resins, maleic acid copolymer resins, polyester resins obtained by condensation polymerization reactions, and polyurethane resins. Materials for synthesizing such alkali-soluble resins are disclosed in, for example, Japanese Unexamined Patent Application Publication No. 2000-94825, and acrylic copolymer resins, maleic acid copolymer resins, polyester-based resins, polyurethane-based resins, and the like that are obtained using the materials described in the above publication can be used. Furthermore, resins obtained using materials other than those described above can also be used. The alkali-soluble resin may be used alone or in combination of two or more kinds.

In the case where the ink composition for inkjet printing contains the alkali-soluble resin, it is preferable that the ink composition contain a basic compound used for dissolving the alkali-soluble resin. Examples of the basic compound include inorganic basic compounds such as sodium hydroxide and potassium hydroxide; and organic basic compounds such as ammonia, methylamine, ethylamine, monoethanolamine, N,N-dimethylethanolamine, N,N-diethylethanolamine, N,N-dibutylethanolamine, diethanolamine, N-methyldiethanolamine, triethanolamine, morpholine, N-methylmorpholine, and N-ethylmorpholine. The basic compound may be used alone or in combination of two or more kinds.

The proportion of the basic compound in the aqueous ink composition for inkjet printing according to the present invention may be any amount sufficient to dissolve the alkali-soluble resin in the medium. Typically, from the viewpoint of enhancing the dispersion stability of the alkali-soluble resin, the proportion is preferably 0.05% by mass or more, more preferably 0.1% by mass or more; on the other hand, from the viewpoint of enhancing the water resistance of printed matter, the proportion is preferably 1% by mass or less, more preferably 0.5% by mass or less.

[2. Physical Properties and Preparation of Ink Composition for Inkjet Printing]

The ink composition for inkjet printing has a static surface tension of 27 mN/m or more and 33 mN/m or less as measured at 23°C, and has a dynamic surface tension of 33 mN/m or more and 39 mN/m or less at a lifetime of 10 ms, as measured by the maximum bubble pressure method at 23°C. If the static surface tension is less than 27 mN/m or more than 33 mN/m, the meniscus may become unstable or the ink may be insufficiently supplied at the nozzle surface, which may result in poor discharge stability and poor continuous discharge stability. Similarly, if the dynamic surface tension is less than 33 mN/m or more than 39 mN/m, the meniscus may become unstable or the ink may be insufficiently supplied at the nozzle surface, which may result in poor discharge stability and poor continuous discharge stability.

The viscosity of the ink composition for inkjet printing is 2.0 to 15.0 mPa·s, preferably 3.0 to 12.0 mPa·s. The viscosity can be measured, for example, using a type-E viscometer (trade name: "RE100L-type viscometer", Toki Sangyo Co., Ltd.).

The method for preparing (producing) the ink composition for inkjet printing is not particularly limited, and may be conducted by sequentially or simultaneously adding and mixing the above components. Examples include (1) a method in which a mixture of an aqueous resin varnish, which is obtained by dissolving an alkali-soluble resin in water in the presence of the basic compound, and a pigment is subjected to dispersion using a dispersing machine (e.g., a ball mill, an attritor, a roll mill, a sand mill, or an agitator mill) to prepare a pigment-dispersed liquid (ink base), and the remaining components (including the water-soluble organic solvent, the resin emulsion, and the surfactant) are further added to prepare the aqueous ink composition for inkjet printing; and (2) a method in which, after preparing a pigment-dispersed liquid (ink base) as in (1), an alkali-soluble resin is deposited on the pigment surface by an acid precipitation method or by ion-exchange means as described in International Publication WO2005/116147 to obtain a resin-coated pigment, which is then neutralized with a basic compound and redispersed in water using a dispersing machine (e.g., a high-speed stirrer), and the remaining components (including the water-soluble organic solvent, the resin emulsion, and the surfactant) are further added to prepare the aqueous ink composition for inkjet printing.

[3. Printing Using Ink Composition for Inkjet Printing]

The ink composition for inkjet printing according to the present invention can be used to print on a substrate by an inkjet method. Specifically, it can be obtained by printing (applying) the aqueous ink composition for inkjet printing onto a substrate using an inkjet printer.

Examples of substrate for printing with the ink composition for inkjet printing include coated papers such as art paper, inkjet-specific paper, and inkjet glossy paper; non-absorption printing medium such as plastic-based substrates, including polypropylene films and polyvinyl chloride sheets; uncoated papers such as plain paper and offset paper; and fabrics such as cotton. In particular, the ink composition for inkjet printing according to the present invention is suitable for non-absorption printing medium.

In the inkjet printing method using the ink composition for inkjet printing, conditions known in the art can be appropriately employed; for example, the ink composition for inkjet printing is stored in an ink cartridge, the ink cartridge is mounted in an inkjet recording device employing a single-pass system or the like, and inkjet printing is then performed by jetting the ink from a nozzle onto a substrate.

The ink composition applied to the substrate is fixed on the substrate as a print layer as a result of being dried. The drying means is not particularly limited. Known drying methods include heat drying, hot-air drying, infrared drying, microwave drying, and drum drying. It is preferable to apply the ink composition for inkjet printing such that the film thickness after drying (the thickness of the print layer) is, for example, 1 to 10 μm.

In particular, the ink composition for inkjet printing according to the present invention can effectively maintain discharge stability, which is an advantageous effect of the present invention, during high-speed printing (in which the ink discharge frequency is increased) or continuous printing, thereby achieving high-quality printing. High-speed printing refers to, for example, a printing speed at which 30 or more substrate (A4 portrait) can be printed per minute. Continuous printing refers to, for example, printing 50 or more substrate (A4 portrait) continuously.

## Examples

The present invention will be described in more detail below with reference to Examples; however, the scope of the present invention should not be construed as being limited by the contents of the Examples. The compounding amounts of the components shown in Tables 1 to 4 are in parts by mass.

<A. Preparation of Pigment Ink Bases>

Ink bases (pigment dispersions) of a white pigment, a yellow pigment, a magenta pigment, a cyan pigment, and a

black pigment were prepared by the procedure described below. The alkali-soluble resin used was a copolymer of acrylic acid, stearyl acrylate, and styrene, had been neutralized with potassium hydroxide, and had an acid value of 180 mgKOH/g, a glass transition temperature of 50°C, and a weight-average molecular weight Mw of 30000.

<A-a. Aqueous Black Pigment Ink Base (BASE-K)>

To 32 parts by mass of the alkali-soluble resin, 48 parts by mass of water were added and mixed to prepare a resin varnish for pigment dispersion. To the varnish, 20 parts by mass of carbon black (Pigment Black 7, trade name: Printex 90, Orion Engineered Carbons GmbH) were added, followed by stirring and mixing. The resulting mixture was kneaded with a wet circulation mill to prepare an aqueous black pigment ink base (pigment content: 20% by mass).

<A-b. Aqueous Cyan Pigment Ink Base (BASE-C)>

To 32 parts by mass of the alkali-soluble resin, 48 parts by mass of water were added and mixed to prepare a resin varnish for pigment dispersion. To the varnish, 20 parts by mass of a cyan pigment (Pigment Blue 15:4, trade name: Heliogen Blue L 7101 F, manufactured by BASF SE) were added, followed by stirring and mixing. The resulting mixture was kneaded with a wet circulation mill to prepare an aqueous cyan pigment ink base (pigment content: 20% by mass).

<A-c. Aqueous Magenta Pigment Ink Base (BASE-M)>

To 32 parts by mass of the alkali-soluble resin, 48 parts by mass of water were added and mixed to prepare a resin varnish for pigment dispersion. To the varnish, 20 parts by mass of a magenta pigment (Pigment Violet 19, trade name: Ink Jet Magenta E5B 02, manufactured by CLARIANT) were added, followed by stirring and mixing. The resulting mixture was kneaded with a wet circulation mill to prepare an aqueous magenta pigment ink base (pigment content: 20% by mass).

<A-d. Aqueous Yellow Pigment Ink Base (BASE-Y)>

To 32 parts by mass of the alkali-soluble resin, 48 parts by mass of water were added and mixed to prepare a resin varnish for pigment dispersion. To the varnish, 20 parts by mass of a yellow pigment (Pigment Yellow 155, trade name: Novoperm Yellow 4G 01, manufactured by CLARIANT) were added, followed by stirring and mixing. The resulting mixture was kneaded with a wet circulation mill to prepare an aqueous yellow pigment ink base (pigment content: 20% by mass).

<A-e. Aqueous White Pigment Ink Base (BASE-W)>

To 32 parts by mass of the alkali-soluble resin, 28 parts by mass of water were added and mixed to prepare a resin varnish for pigment dispersion. To the varnish, 40.0 parts by mass of a titanium oxide pigment (trade name: CR-90, manufactured by Ishihara Sangyo Kaisha, Ltd.) were added, followed by stirring and mixing. The resulting mixture was kneaded with a wet circulation mill to obtain an aqueous white pigment ink base (pigment content: 40% by mass).

<B. Preparation of Ink Composition for Inkjet Printing>

An ink composition for inkjet printing was prepared using one of the pigment ink bases prepared in A. above and the components listed below.

<B-a. Water-Soluble Organic Solvent>

- Propylene glycol: SP value 12.6 $(cal/cm^3)^{1/2}$
- Glycerin: SP value 14.9 $(cal/cm^3)^{1/2}$
- Tripropylene glycol: SP value 9.0 $(cal/cm^3)^{1/2}$
- Butyl carbitol: SP value 8.9 $(cal/cm^3)^{1/2}$

<B-b. Fine resin particles (Resin Emulsion)>

- AQUACER 531 (BYK-Chemie GmbH): polyethylene-based resin

- · YODOSOL AD173 (Henkel AG & Co. KGaA): acrylic resin
- · NeoCryl A-1092 (Covestro AG): styrene-acrylic resin
- · VINYBLAN 1245L (Nissin Chemical Industry Co., Ltd.): vinyl acetate-acrylic resin
- · VINYBLAN 278 (Nissin Chemical Industry Co., Ltd.): vinyl chloride-acrylic resin
- · VINYBLAN GV6181 (Nissin Chemical Industry Co., Ltd.): vinyl acetate resin
- · SUPERFLEX 740 (DKS Co. Ltd.): polyester-based polyurethane resin
- · NeoRez R-966 (Covestro AG): polyether-based polyurethane resin
- · SUPERFLEX 420NS (DKS Co. Ltd.): polycarbonate-based polyurethane resin
- · SEPOLSION ES (Sumitomo Seika Chemicals Co., Ltd.): polyester-based resin

<B-c. Surfactant>

- · SURFYNOL 465 (Nissin Chemical Industry Co., Ltd.): acetylenic glycol-based surfactant
- · OLFINE 1004 (Nissin Chemical Industry Co., Ltd.): acetylenic glycol-based surfactant
- · TEGO GLIDE 450 (Evonik Industries AG): silicone-based surfactant
- · SILFACE SAG (Nissin Chemical Industry Co., Ltd.): silicone-based surfactant
- · EMULGEN 705 (Kao Corporation): alcohol ethoxylate-based surfactant
- · EMULGEN 104 (Kao Corporation): alcohol ethoxylate-based surfactant
- · PERSOFT EF (ADEKA Corporation): anionic surfactant

<B-d. Procedure for Preparing Ink Composition>

Ink compositions of Examples and Comparative Examples were prepared according to the formulations shown in Tables 1 to 4. Specifically, to one of the pigment ink bases prepared in A. above, a water-soluble organic solvent, fine resin particles, a surfactant, and water were added, followed by stirring and mixing. In Table 1 to 4, the content of fine resin particles refers to the solid content.

<C. Evaluation of Ink Composition for Inkjet Printing>

Each of the aqueous ink compositions for inkjet printing of Examples 1 to 35 and Comparative Examples 1 to 14, which were obtained in Examples and Comparative Examples, was evaluated with respect to the following items.

<C-a. Storage Stability>

Each of the aqueous ink compositions for inkjet printing of Examples 1 to 35 and Comparative Examples 1 to 14 was charged into a glass bottle, and the viscosity at 25°C was measured using a viscometer (RE100L model, manufactured by Toki Sangyo Co., Ltd.). Subsequently, the bottle was tightly sealed and stored at 60°C for 1 month. The viscosity (25°C) after storage was measured using the viscometer in the same manner as described above. The temporal stability was evaluated in terms of the viscosity change ratio [(Viscosity after storage - Viscosity before storage)/Viscosity before storage].

Evaluation Criteria

◦: Viscosity change ratio less than 5%
Δ: Viscosity change ratio of 5% or more and less than 10%
×: Viscosity change ratio of 10% or more and less than 30%

<C-b. Discharge stability>

Each of the aqueous ink compositions for inkjet printing of Examples 1 to 35 and Comparative Examples 1 to 14 was charged into a cartridge of a PX105 printer manufactured by Seiko Epson Corporation, and printing was performed on GL-101A450 photo paper (manufactured by CANON INC.) or a masking paper (only for W ink) to evaluate the discharge stability.

Evaluation Criteria

◦: No printing irregularities were observed; stable discharge was achieved
Δ: Some printing irregularities were observed; however, discharge was achieved
×: Printing irregularities were observed; stable discharge was not achieved

<C-c. Continuous Discharge stability>

Each of the aqueous ink compositions for inkjet printing of Examples 1 to 35 and Comparative Examples 1 to 14 was charged into a cartridge of a PX105 printer manufactured by Seiko Epson Corporation, and 50 sheets of a 15 cm × 20 cm solid image were continuously printed on GL-101A450 photo paper (manufactured by CANON INC.) or on a masking paper (only for W ink) to evaluate the continuous discharge stability.

Evaluation Criteria

◦: Image quality was good; stable discharge was achieved
Δ: Some deterioration in image quality, such as streaks, was observed; however, discharge was achieved
×: Deterioration in image quality, such as streaks, was observed; stable discharge was not achieved

<C-d. Abrasion resistance>

Each of the printed matter samples obtained in <C-c> was dried in an oven at 80°C for 3 minutes, and the printed surface was then rubbed with a cotton swab to evaluate the abrasion resistance.

Evaluation Criteria

◦: No blurriness was observed even after the coating film surface was rubbed 10 times with a cotton swab
Δ: Slight blurriness was observed on the rubbed area and color was transferred to the cotton swab after the coating film surface was rubbed 10 times with the cotton swab
×: The rubbed area was completely peeled off after the coating film surface was rubbed 10 times with a cotton swab

<C-e. Anti-blocking property>

The printed face and non-printed face of each of the printed matter samples obtained in <C-c> above were brought into contact and clamped with a vise. After standing at 40°C for 1 day, they were peeled by hand, and the anti-blocking property of the printed matter was evaluated on the basis of the degree of peeling of ink and the strength of the peeling resistance, in accordance with the following evaluation criteria.

Evaluation Criteria

◦: No peeling of the printed coating film was observed
Δ: Slight peeling of the printed coating film was observed, and strong peeling resistance was felt
×: Significant peeling of the printed coating film was observed, and strong peeling resistance was felt

<C-f. Image Quality (Absorption Medium)>

Each of the aqueous ink compositions for inkjet printing of Examples 1 to 35 and Comparative Examples 1 to 14 was charged into a cartridge of a PX105 printer manufactured by Seiko Epson Corporation, and a 15 cm × 20 cm solid image was printed on GL-101A450 photo paper (manufactured by CANON INC.) or on a masking paper (only for W ink). The solid area of the printed matter was visually evaluated for the degree of fill.

Evaluation Criteria

◦: The solid area was cleanly filled, and streaks were hardly noticeable
×: Streaks were clearly noticeable throughout

<C-g. Image Quality (Low-Absorption Medium)>

Each of the aqueous ink compositions for inkjet printing of Examples 1 to 35 and Comparative Examples 1 to 14 was charged into a cartridge of a PX105 printer manufactured by Seiko Epson Corporation, and a 15 cm × 20 cm solid image was printed on OK Top Coat+ (manufactured by Oji Paper Co., Ltd.). The solid area of the printed matter was visually evaluated for the degree of fill.

Evaluation Criteria

◦: The solid area was cleanly filled, and streaks were hardly noticeable
×: Streaks were clearly noticeable throughout

[Table 1]

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Pigment dispersion | BASE-K | 25.0 | - | - | - | - | 25.0 | 25.0 | 25.0 | 25.0 | 25.0 | 25.0 | 25.0 |
| | BASE-C | - | 15.0 | - | - | - | - | - | | - | - | | - |
| | BASE-M | - | - | 25.0 | - | - | - | - | - | - | - | - | - |
| | BASE-Y | - | - | - | 25.0 | - | - | - | - | - | - | - | - |
| | BASE-W | - | - | - | - | 25.0 | - | - | - | - | - | - | - |
| Water-soluble organic solvent | Propylene glycol | 35.0 | 45.0 | 35.0 | 35.0 | 35.0 | - | 35.0 | 35.0 | 35.0 | 35.0 | 35.0 | 35.0 |
| | Glycerin | - | - | - | - | - | 28.0 | - | - | - | - | - | - |

(continued)

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Fine resin particles (solid) | AQUACER 531 | 1.0 | 1.0 | 1.0 | 1.0 | 1.0 | 1.0 | - | - | - | - | - | - |
| | YODOSOL AD173 | - | - | - | - | - | - | 1.0 | - | - | - | - | - |
| | NeoCryl A-1092 | - | - | - | - | - | - | - | 1.0 | - | - | - | - |
| | VINYBLAN 1245L | - | - | - | - | - | - | - | - | 1.0 | - | - | - |
| | VINYBLAN 278 | - | - | - | - | - | - | - | - | - | 1.0 | | - |
| | VINYBLAN GV6181 | - | - | - | - | - | - | - | - | - | - | 1.0 | - |
| | SUPERFLEX 740 | - | - | - | - | - | - | - | - | - | - | - | 1.0 |
| | NeoRez R-966 | - | - | - | - | - | - | - | - | - | - | - | - |
| | SUPERFLEX 420NS | - | - | - | - | - | - | - | - | - | - | - | - |
| | SEPOLSION ES | - | - | - | - | - | - | - | - | - | - | - | - |
| Surfactant | SURFYNOL 465 (D-1) | 0.5 | 0.5 | 0.5 | 0.5 | 0.5 | 0.5 | 0.5 | 0.5 | 0.5 | 0.5 | 0.5 | 0.5 |
| | TEGO GLIDE 450 (D-2) | 0.1 | 0.1 | 0.1 | 0.1 | 0.1 | 0.1 | 0.1 | 0.1 | 0.1 | 0.1 | 0.1 | 0.1 |
| | EMULGEN 705 (D-3) | 0.5 | 0.5 | 0.5 | 0.5 | 0.5 | 0.5 | 0.5 | 0.5 | 0.5 | 0.5 | 0.5 | 0.5 |
| | PERSOFT EF | - | - | - | - | - | - | - | - | - | - | - | - |
| Water | | 37.9 | 37.9 | 37.9 | 37.9 | 37.9 | 44.9 | 37.9 | 37.9 | 37.9 | 37.9 | 37.9 | 37.9 |
| Total | | 100 | 100 | 100 | 100 | 100 | 100 | 100 | 100 | 100 | 100 | 100 | 100 |
| (D-1)+(D-2)+(D-3) | | 1.1 | 1.1 | 1.1 | 1.1 | 1.1 | 1.1 | 1.1 | 1.1 | 1.1 | 1.1 | 1.1 | 1.1 |
| (D-1)/(D-2) | | 5 | 5 | 5 | 5 | 5 | 5 | 5 | 5 | 5 | 5 | 5 | 5 |
| (D-1)/(D-3) | | 1 | 1 | 1 | 1 | 1 | 1 | 1 | 1 | 1 | 1 | 1 | 1 |

(continued)

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Evaluation | Storage stability | ○ | ○ | ○ | ○ | ○ | ○ | ○ | ○ | ○ | ○ | ○ | ○ |
| | Discharge stability | ○ | ○ | ○ | ○ | ○ | ○ | ○ | ○ | ○ | ○ | ○ | ○ |
| | Continuous discharge stability | ○ | ○ | ○ | ○ | ○ | ○ | ○ | ○ | ○ | ○ | ○ | ○ |
| | Abrasion resistance | ○ | ○ | ○ | ○ | ○ | ○ | ○ | ○ | ○ | ○ | ○ | ○ |
| | Anti-blocking property | ○ | ○ | ○ | ○ | ○ | ○ | ○ | ○ | ○ | ○ | ○ | ○ |
| | Image quality: absorption medium | ○ | ○ | ○ | ○ | ○ | ○ | ○ | ○ | ○ | ○ | ○ | ○ |
| | Image quality: low-absorption medium | ○ | ○ | ○ | ○ | ○ | ○ | ○ | ○ | ○ | ○ | ○ | ○ |

[Table 2]

| | | Examples | | | | | | | | | | | |
|---|---|---|---|---|---|---|---|---|---|---|---|---|---|
| | | 13 | 14 | 15 | 16 | 17 | 18 | 19 | 20 | 21 | 22 | 23 | 24 |
| Pigment dispersion | BASE-K | 25.0 | 25.0 | 25.0 | 25.0 | 25.0 | 25.0 | 25.0 | 25.0 | 25.0 | 25.0 | 25.0 | 25.0 |
| | BASE-C | - | - | - | - | - | - | - | - | - | - | - | - |
| | BASE-M | - | - | - | - | - | - | - | - | - | - | - | - |
| | BASE-Y | - | - | - | - | - | - | - | - | - | - | - | - |
| | BASE-W | - | - | - | - | - | - | - | - | - | - | - | - |
| Water-soluble organic solvent | Propylene glycol | 35.0 | 35.0 | 35.0 | 35.0 | 35.0 | 35.0 | 35.0 | 35.0 | 35.0 | 35.0 | 35.0 | 35.0 |
| | Glycerin | - | - | - | - | - | - | - | - | - | - | - | - |

(continued)

| | | Examples | | | | | | | | | | | |
|---|---|---|---|---|---|---|---|---|---|---|---|---|---|
| | | 13 | 14 | 15 | 16 | 17 | 18 | 19 | 20 | 21 | 22 | 23 | 24 |
| Fine resin particles (solid) | AQUACER 531 | - | - | - | 1.0 | 1.0 | 1.0 | 1.0 | 1.0 | 1.0 | 1.0 | 1.0 | 1.0 |
| | YODOSOL AD173 | - | - | - | - | - | - | - | - | - | - | - | - |
| | NeoCryl A-1092 | - | - | - | - | - | - | - | - | - | - | - | - |
| | VINYBLAN 1245L | - | - | - | - | - | - | - | - | - | - | - | - |
| | VINYBLAN 278 | - | - | - | - | - | - | - | - | - | - | - | - |
| | VINYBLAN GV6181 | - | - | - | - | - | - | - | - | - | - | - | - |
| | SUPERFLEX 740 | - | - | - | - | - | - | - | - | - | - | - | - |
| | NeoRez R-966 | 1.0 | - | - | - | - | - | - | - | - | - | - | - |
| | SUPERFLEX 420NS | - | 1.0 | - | - | - | - | - | - | - | - | - | - |
| | SEPOLSION ES | - | - | 1.0 | - | - | - | - | - | - | - | - | - |
| Surfactant | SURFYNOL 465 (D-1) | 0.5 | 0.5 | 0.5 | 0.1 | 0.9 | 1 | 0.5 | 0.1 | 1 | 0.3 | 0.9 | 0.5 |
| | TEGO GLIDE 450 (D-2) | 0.1 | 0.1 | 0.1 | 0.1 | 0.9 | 0.1 | 0.1 | 0.1 | 0.1 | 0.1 | 0.1 | 0.1 |
| | EMULGEN 705 (D-3) | 0.5 | 0.5 | 0.5 | 0.5 | 0.5 | 0.5 | 0.5 | 1 | 0.1 | 0.3 | 0.9 | 0.5 |
| | PERSOFT EF | - | - | - | - | - | - | 0.4 | - | - | - | - | - |
| Water | | 37.9 | 37.9 | 37.9 | 38.3 | 36.7 | 37.4 | 37.5 | 37.8 | 37.8 | 38.3 | 37.1 | 37.9 |
| Total | | 100 | 100 | 100 | 100 | 100 | 100 | 100 | 100 | 100 | 100 | 100 | 100 |
| (D-1)+(D-2)+(D-3) | | 1.1 | 1.1 | 1.1 | 0.7 | 2.3 | 1.6 | 1.1 | 1.2 | 1.2 | 0.7 | 1.9 | 1.1 |
| (D-1)/(D-2) | | 5 | 5 | 5 | 1 | 1 | 10 | 5 | 1 | 10 | 3 | 9 | 5 |
| (D-1)/(D-3) | | 1 | 1 | 1 | 0.2 | 1.8 | 2 | 1 | 0.1 | 10 | 1 | 1 | 1 |

(continued)

| | | Examples | | | | | | | | | | | |
|---|---|---|---|---|---|---|---|---|---|---|---|---|---|
| | | 13 | 14 | 15 | 16 | 17 | 18 | 19 | 20 | 21 | 22 | 23 | 24 |
| Evaluation | Storage stability | ○ | ○ | ○ | ○ | ○ | ○ | ○ | ○ | ○ | ○ | ○ | ○ |
| | Discharge stability | ○ | ○ | ○ | ○ | ○ | ○ | ○ | ○ | ○ | ○ | ○ | ○ |
| | Continuous discharge stability | ○ | ○ | ○ | Δ | ○ | ○ | ○ | ○ | ○ | ○ | ○ | ○ |
| | Abrasion resistance | ○ | ○ | ○ | ○ | ○ | ○ | ○ | ○ | ○ | ○ | ○ | ○ |
| | Anti-blocking property | ○ | ○ | ○ | ○ | Δ | Δ | ○ | ○ | Δ | ○ | Δ | ○ |
| | Image quality: absorption medium | ○ | ○ | ○ | ○ | ○ | ○ | ○ | ○ | ○ | ○ | ○ | ○ |
| | Image quality: low-absorption medium | ○ | ○ | ○ | ○ | ○ | ○ | ○ | ○ | ○ | ○ | ○ | ○ |

**[Table** 3]

| | | Examples | | | | | | | | | | |
|---|---|---|---|---|---|---|---|---|---|---|---|---|
| | | 25 | 26 | 27 | 28 | 29 | 30 | 31 | 32 | 33 | 34 | 35 |
| Pigment dispersion | BASE-K | 25.0 | 25.0 | 25.0 | 25.0 | 25.0 | 25.0 | 25.0 | 25.0 | 25.0 | 25.0 | 25.0 |
| Water-soluble organic solvent | Propylene glycol | 18.0 | 48.0 | 35.0 | 35.0 | 35.0 | 35.0 | 35.0 | 35.0 | 35.0 | 35.0 | 35.0 |
| Fine resin particles (solid) | AQUACER 531 | 1.0 | 1.0 | 0.2 | 9.0 | 1.0 | 1.0 | 1.0 | 1.0 | 1.0 | 1.0 | 1.0 |
| Surfactant | SURFYNOL 465 (D-1) | 0.5 | 0.5 | 0.5 | 0.5 | - | 0.5 | 0.5 | - | - | 0.5 | - |
| | OLFINE 1004 (D-1) | - | - | - | - | 0.5 | - | - | 0.5 | 0.5 | - | 0.5 |
| | TEGO GLIDE 450 (D-2) | 0.1 | 0.1 | 0.1 | 0.1 | 0.1 | - | 0.1 | - | 0.1 | - | - |
| | SILFACE SAG (D-2) | - | - | - | - | - | 0.1 | - | 0.1 | - | 0.1 | 0.1 |
| | EMULGEN 705 (D-3) | 0.5 | 0.5 | 0.5 | 0.5 | 0.5 | 0.5 | - | 0.5 | - | - | - |
| | EMULGEN 104 (D-3) | - | - | - | - | - | - | 0.5 | - | 0.5 | 0.5 | 0.5 |
| Water | | 54.9 | 24.9 | 38.7 | 29.9 | 37.9 | 37.9 | 37.9 | 37.9 | 37.9 | 37.9 | 37.9 |
| Total | | 100 | 100 | 100 | 100 | 100 | 100 | 100 | 100 | 100 | 100 | 100 |

(continued)

| | | Examples | | | | | | | | | | |
|---|---|---|---|---|---|---|---|---|---|---|---|---|
| | | 25 | 26 | 27 | 28 | 29 | 30 | 31 | 32 | 33 | 34 | 35 |
| (D-1)+(D-2)+(D-3) | | 1.1 | 1.1 | 1.1 | 1.1 | 1.1 | 1.1 | 1.1 | 1.1 | 1.1 | 1.1 | 1.1 |
| (D-1)/(D-2) | | 5 | 5 | 5 | 5 | 5 | 5 | 5 | 5 | 5 | 5 | 5 |
| (D-1)/(D-3) | | 1 | 1 | 1 | 1 | 1 | 1 | 1 | 1 | 1 | 1 | 1 |
| Evaluation | Storage stability | ○ | Δ | ○ | ○ | ○ | ○ | ○ | ○ | ○ | ○ | ○ |
| | Discharge stability | ○ | ○ | ○ | Δ | ○ | ○ | ○ | ○ | ○ | ○ | ○ |
| | Continuous discharge stability | Δ | ○ | ○ | Δ | ○ | ○ | ○ | ○ | ○ | ○ | ○ |
| | Abrasion resistance | ○ | ○ | Δ | ○ | ○ | ○ | ○ | ○ | ○ | ○ | ○ |
| | Anti-blocking property | ○ | ○ | ○ | ○ | ○ | ○ | ○ | ○ | ○ | ○ | ○ |
| | Image quality: absorption medium | ○ | ○ | ○ | ○ | ○ | ○ | ○ | ○ | ○ | ○ | ○ |
| | Image quality: low-absorption medium | ○ | ○ | ○ | ○ | ○ | ○ | ○ | ○ | ○ | ○ | ○ |

[Table 4]

| | | Comparative Examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Pigment dispersion | BASE-K | 25.0 | 25.0 | 25.0 | 25.0 | 25.0 | 25.0 | 25.0 | 25.0 | 25.0 | 25.0 | 25.0 | 25.0 | 25.0 | 25.0 |
| Water-soluble organic solvent | Propylene glycol | 10.0 | 60.0 | - | - | 35.0 | 35.0 | 35.0 | 35.0 | 35.0 | 35.0 | 35.0 | 35.0 | 35.0 | 35.0 |
| | Tripropylene glycol | - | - | 35.0 | - | - | - | - | - | - | - | - | - | - | - |
| | Butyl carbitol | - | - | - | 35.0 | - | - | - | - | - | - | - | - | - | - |
| Fine resin particles (solid) | AQUACER 531 | 1.0 | 1.0 | 1.0 | 1.0 | 0.01 | 15.0 | 1.0 | 1.0 | 1.0 | 1.0 | 1.0 | 1.0 | 1.0 | 1.0 |
| Surfactant | SURFYNOL 465 (D-1) | 0.5 | 0.5 | 0.5 | 0.5 | 0.5 | 0.5 | 2.0 | 0.01 | 0.05 | 1.5 | 2 | 0.09 | 0.1 | 1.5 |
| | TEGO GLIDE 450 (D-2) | 0.1 | 0.1 | 0.1 | 0.1 | 0.5 | 0.5 | 2.0 | 0.01 | 1.5 | 0.05 | 0.1 | 0.1 | 0.1 | 0.1 |
| | EMULGEN 705 (D-3) | 0.5 | 0.5 | 0.5 | 0.5 | 0.5 | 0.5 | 0.5 | 0.5 | 0.5 | 0.5 | 2 | 0.1 | 1.5 | 0.1 |
| Water | | 62.9 | 12.9 | 37.9 | 37.9 | 38.5 | 23.5 | 34.5 | 38.5 | 37.0 | 37.0 | 34.9 | 38.7 | 37.3 | 37.3 |
| Total | | 100 | 100 | 100 | 100 | 100 | 100 | 100 | 100 | 100 | 100 | 100 | 100 | 100 | 100 |
| (D-1)+(D-2)+(D-3) | | 1.1 | 1.1 | 1.1 | 1.1 | 1.5 | 1.5 | 4.5 | 0.52 | 2.05 | 2.05 | 4.1 | 0.29 | 1.7 | 1.7 |
| (D-1)/(D-2) | | 5 | 5 | 5 | 5 | 1 | 1 | 1 | 1 | 0.03 | 30 | 20 | 0.9 | 1 | 15 |
| (D-1)/(D-3) | | 1 | 1 | 1 | 1 | 1 | 1 | 4 | 0.02 | 0.1 | 3 | 1 | 0.9 | 0.07 | 15 |
| Evaluation | Storage stability | ○ | × | × | × | ○ | × | × | ○ | ○ | ○ | Δ | ○ | ○ | Δ |
| | Discharge stability | × | Δ | ○ | × | ○ | × | Δ | Δ | ○ | ○ | Δ | Δ | Δ | Δ |
| | Continuous discharge stability | × | ○ | ○ | × | ○ | × | × | × | × | × | × | × | × | × |
| | Abrasion resistance | ○ | ○ | ○ | ○ | × | ○ | ○ | ○ | ○ | ○ | ○ | ○ | ○ | ○ |
| | Anti-blocking property | ○ | ○ | ○ | ○ | ○ | ○ | × | ○ | × | × | × | ○ | ○ | × |
| | Image quality: absorption medium | × | ○ | ○ | ○ | ○ | × | ○ | × | ○ | ○ | ○ | × | ○ | ○ |
| | Image quality: low-absorption medium | × | ○ | ○ | ○ | ○ | × | ○ | × | ○ | × | ○ | × | ○ | ○ |

As shown in Comparative Example 1 in Table 4, the ink composition containing 10.0% by mass of the water-soluble organic solvent (propylene glycol) exhibited insufficient discharge stability and reduced image quality of the printed matter. Also, as shown in Comparative Example 2, the ink composition containing 60.0% by mass of the water-soluble organic solvent (propylene glycol) exhibited insufficient storage stability. In addition, the ink composition of Example 25 in Table 3, containing 18.0% by mass of the water-soluble organic solvent (propylene glycol), and the ink composition of Example 26 in Table 3, containing 48.0% by mass of the water-soluble organic solvent (propylene glycol), both exhibited practically acceptable performance; however, in Example 25, the continuous discharge stability was slightly inferior, whereas in Example 26, the storage stability was slightly inferior. In contrast, the ink compositions of the examples in which the content of the water-soluble organic solvent (propylene glycol or a glycol) falls within the range of 28.0% to 45.0% by mass all exhibited good storage stability, sufficient discharge stability, and good image quality.

As shown in Comparative Examples 3 and 4 in Table 4, the ink compositions using tripropylene glucol (SP value: 9.0 $(cal/cm^3)^{1/2}$) or butyl carbitol (SP value: 8.9 $(cal/cm^3)^{1/2}$) as the water-soluble organic solvent both exhibited insufficient storage stability. Furthermore, in the ink composition of Comparative Example 4, the discharge stability also deteriorated.

As shown in Comparative Example 5 in Table 4, the ink composition containing 0.01% by mass of the fine resin particles (AQUACER 531) exhibited insufficient abrasion resistance of the printed matter. Also, as shown in Comparative Example 6, the ink composition containing 15.0% by mass of the fine resin particles (AQUACER 531) exhibited insufficient storage stability. In addition, the discharge stability also deteriorated, and the image quality of the printed matter also decreased. Moreover, the ink composition of Example 27 in Table 3, containing 0.2% by mass of solid content of the fine resin particles, and the ink composition of Example 28 in Table 3, containing 9.0% by mass of solid content of the fine resin particles, both exhibited practically acceptable performance; however, in Example 27, the abrasion resistance was slightly inferior, whereas in Example 28, the discharge stability and continuous discharge stability were slightly inferior. In contrast, the ink compositions containing 1.0% by mass of the fine resin particles all exhibited high abrasion resistance of the printed matter, good storage stability, and good discharge stability.

As shown in Comparative Example 7 in Table 4, the ink composition in which the total content of the surfactants (total of (D-1), (D-2), and (D-3)) was 4.5% by mass exhibited insufficient storage stability. In addition, the discharge stability during continuous printing also deteriorated, and the anti-blocking property also decreased. In contrast, the ink compositions in which the total content of the surfactants was 0.1% by mass or more and 3.0% by mass or less exhibited good storage stability, good discharge stability, and high anti-blocking property.

As shown in Comparative Examples 8 and 13 in Table 4, it is found that, when the mass content ratio [(D-1)/(D-3)] of the surfactants (D-1) and (D-3) is less than 0.1, the discharge stability, particularly the continuous discharge stability, deteriorates. In particular, in Comparative Example 8, in which the ratio [(D-1)/(D-3)] was 0.02 and the total content of the surfactants was relatively low (0.52% by mass), the image quality of the printed matter also deteriorated.

As shown in Comparative Example 14 in Table 4, it is found that, in the ink composition in which the ratio [(D-1)/(D-3)] was 15, the storage stability of the ink decreased. In addition, the discharge stability, particularly the continuous discharge stability, also became poor, and the anti-blocking property also deteriorated.

As shown in Comparative Examples 9 and 12 in Table 4, when the mass content ratio [(D-1)/(D-2)] of the surfactants (D-1) and (D-2) was less than 1.0, the continuous discharge stability deteriorated. In Comparative Example 9, in which the mass content ratio [(D-1)/(D-2)] was particularly low at 0.03, that is, the relative ratio of the surfactant (D-2) was high, the anti-blocking property also decreased. In Comparative Example 12, in which the total content of the surfactants was relatively low, the image quality of the printed matter decreased.

As shown in Comparative Examples 10 and 11 in Table 4, when the ratio [(D-1)/(D-2)] exceeds 10 (30 and 20), the continuous discharge stability deteriorated and the anti-blocking property decreased. In this way, it is found that, when the mass content ratio [(D-1)/(D-2)] of the surfactants (D-1) and (D-2) exceeds 10, blocking is more likely to occur. In the ink composition of Comparative Example 10, which contained a relatively small amount of the surfactant (D-2), the leveling performance of the ink composition decreased, and the image quality of printed matter on low-absorption media decreased.

As shown in Tables 1 to 4, the ink compositions of Examples 1 to 35 were evaluated to be sufficient in all evaluation items, such as storage stability and discharge stability. However, as shown in Example 16, when the mass content ratio [(D-1)/(D-3)] was relatively low (0.2), a tendency toward decreased discharge stability during continuous printing was observed.

As shown in Examples 18, 21, and 23 in Table 2, when the mass content ratio [(D-1)/(D-2)] was relatively high (9 or 10), a tendency toward decreased anti-blocking property of the printed matter was observed. Furthermore, as shown in Example 17, when the total content of the surfactants was relatively high (2.3% by mass), a tendency toward decreased anti-blocking property of the printed matter was observed.

As shown by the comparison between Examples 1 to 28 and Examples 29 to 35, sufficiently good evaluations were obtained regardless of whether the acetylenic glycol-based surfactant (D-1) was SURFONYL 465 or OLFINE 1004, whether the silicone-based surfactant (D-2) was TEGO GLIDE 450 or SILFACE SAG, or which alcohol ethoxylate-based surfactant (D-3) was used. In this way, it was found that using the acetylenic glycol-based surfactant (D-1), the silicone-based surfactant (D-2), and the alcohol ethoxylate-based surfactant (D-3) in combination resulted in good evaluations in all evaluation items, particularly in discharge stability during continuous printing.

## Industrial Field of Application

The ink composition according to the present invention can be printed by inkjet printing, and printed matter having high abrasion resistance and good image quality can be obtained. Moreover, because the discharge stability in inkjet printing, particularly the discharge stability during continuous printing, is good, the ink composition is applicable to a wide range of uses as an ink composition for inkjet printing.

## Claims

1. An ink composition for inkjet printing, comprising a pigment (A), a water-soluble organic solvent (B), a resin emulsion (C), a surfactant (D), and water (E), wherein:

   the water-soluble organic solvent (B) has two or more hydroxyl groups in a molecule of the water-soluble organic solvent (B) and has an SP value of 12.0 $(cal/cm^3)^{1/2}$ or more at 25°C (298 K), as calculated by a formula of "$\{(\Delta H - RT)/(M/D)\}^{1/2}$" (in the formula, ΔH represents a latent heat of vaporization (cal/mol), R represents a gas constant (1.99 (cal/K·mol)), T represents a temperature (K), M represents a molecular weight (g/mol), and D represents a density ($g/cm^3$));
   a content of the water-soluble organic solvent (B) relative to the ink composition is 15.0% to 50.0% by mass;
   a solid content of the resin emulsion (C) relative to the ink composition is 0.1% to 10% by mass;
   the surfactant (D) includes an acetylenic glycol-based surfactant (D-1), a silicone-based surfactant (D-2), and an alcohol ethoxylate-based surfactant (D-3);
   a total content of the surfactant (D) relative to the ink composition is 0.1% by mass or more and 3.0% by mass or less;
   a mass content ratio [(D-1)/(D-2)] of the acetylenic glycol-based surfactant (D-1) to the silicone-based surfactant (D-2) is 1.0 to 10.0; and
   a mass content ratio [(D-1)/(D-3)] of the acetylenic glycol-based surfactant (D-1) to the alcohol ethoxylate-based surfactant
   (D-3) is 0.1 to 10.0.

2. The ink composition for inkjet printing according to claim 1, wherein a content mass ratio [(D-2)/(D-3)] of the silicone-based surfactant (D-2) to the alcohol ethoxylate-based surfactant (D-3) is 0.1 to 2.0.

3. The ink composition for inkjet printing according to claim 1 or 2, further comprising an alkali-soluble resin dissolved in the ink composition for inkjet printing.

4. The ink composition for inkjet printing according to claim 1 or 2, wherein the SP value of the water-soluble organic solvent (B) is 16.0 $(cal/cm^3)^{1/2}$ or less.

**INTERNATIONAL SEARCH REPORT**

International application No.
**PCT/JP2023/046904**

**A. CLASSIFICATION OF SUBJECT MATTER**

***C09D 11/322***(2014.01)i; ***B41J 2/01***(2006.01)i; ***B41M 5/00***(2006.01)i
FI: C09D11/322; B41M5/00 120; B41J2/01 501

According to International Patent Classification (IPC) or to both national classification and IPC

**B. FIELDS SEARCHED**

Minimum documentation searched (classification system followed by classification symbols)

C09D11/322; B41J2/01; B41M5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-8319 A (KAO CORPORATION) 12 January 2017 (2017-01-12)<br>claims, examples (table 8, examples 21, 22) | 1-4 |
| X | JP 7210802 B1 (SAKATA INX CORP.) 23 January 2023 (2023-01-23)<br>claims, examples 23, 22 | 1-4 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/046904**

| Patent document cited in search report | Publication date (day/month/year) | Patent family member(s) | Publication date (day/month/year) |
|---|---|---|---|
| JP 2017-8319 A | 12 January 2017 | US 2018/0187034 A1<br>claims, examples (table 8, examples 21, 22)<br>WO 2016/208719 A1<br>EP 3315566 A1<br>CN 107735464 A | |
| JP 7210802 B1 | 23 January 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020180178 A
- WO 2020218287 A
- JP 2019119786 A
- JP 2020050705 A
- JP 2012193268 A
- JP 7210802 B
- JP 2000094825 A
- WO 2005116147 A

### Non-patent literature cited in the description

- **J.A. BRYDSON**. Plastics Materials. Butterworth-Heinemann, 1995